# EUROPEAN PATENT SPECIFICATION

(11) **EP 2 735 252 B1**
(45) Date of publication and mention of the grant of the patent: **21.10.2015**
(21) Application number: 12193707.2
(22) Date of filing: 21.11.2012
(51) Int. Cl.: A47J 43/046, A47J 43/07

(54) **Container for a food mixer**
Behälter für einen Lebensmittel-Mixer
Récipient destiné à un mélangeur d'aliments

(43) Date of publication of application: 28.05.2014
(73) Proprietor: Lee, Wen-Ching, Taiwan (CN)
(72) Inventor: Lee, Wen-Ching, Taiwan (CN)
(74) Representative: Lang, Christian

(56) References cited:
- EP-A1- 2 275 013
- CH-A- 348 517
- US-A- 3 139 917

## Description

### BACKGROUND OF THE INVENTION

The present invention relates to a container and, more particularly, to a container for a food mixer.

Food materials, such as vegetables and fruits, can be placed into a container of a food mixer, and a blade unit is driven by a power unit in a base of the food mixer to mince the food material into a paste to obtain juice. Liquid or flavoring can be added into the juice for drinking or eating purposes.

To allow easy carriage by a user, the container is generally made of plastic to reduce the overall weight of the container. However, a bottom wall of the container is liable to deform or deteriorate by high heat resulting from high-speed rotation of the blade unit, causing leakage of the juice. Furthermore, the overall weight of the food mixer is light and without any vibration-absorbing device, such that the user has to press a top of the container downward during operation to avoid falling of the container from the base due to vibration generated during operation of the power unit and the blade unit, resulting in inconvenient use.

Examples for food containers known from prior art are disclosed in US 3 139 917 A and CH 348 517 A.

### BRIEF SUMMARY OF THE INVENTION

To overcome the disadvantages of the prior art, the present invention provides a container for a food mixer according to claim 1. Advantageous embodiments are subject matter of the dependent claims.

The present invention provides a container for a food mixer. The container includes a container body having a bottom wall. A blade unit is mounted in the container body and includes a blade unit body and a coupling member. A seat made of metal is mounted to an outer side of the bottom wall of the container body. The seat includes an underside having a first recess. A weight is mounted to the underside of the seat. A cushioning pad is sandwiched between the weight and the seat. The coupling member extends beyond the underside of the seat or an underside of the weight. The coupling member is adapted to connect with a shaft of a power unit.

Preferably, the seat includes a top side having a second recess. A lower half portion of the container body is partially received in the second recess. A first waterproof gasket is mounted to an edge of an opening of the second recess.

Preferably, a second waterproof gasket is mounted in an interconnection between the blade unit body and the seat

A connecting frame is mounted to the underside of the seat. The connecting frame includes an underside having a tab.

The connecting frame includes an opening having an inner periphery. The weight faces the opening of the connecting frame. The inner periphery of the opening of the connecting frame has a toothed portion. The weight has a tooth on the underside thereof. The tooth is engaged with the toothed portion.

Preferably, the weight includes a top side having an annular groove. The cushioning pad is annular and received in the annular groove.

Preferably, the container body is made of a light-transmittable material and includes a scale on an outer periphery thereof.

The present invention will become clearer in light of the following detailed description of illustrative embodiments of this invention described in connection with the drawings.

### DESCRIPTION OF THE DRAWINGS

FIG. 1 shows a perspective view of a food mixer according to the present invention.
FIG. 2 shows an exploded, perspective view of the food mixer of FIG. 1.
FIG. 3 shows a cross sectional view of the food mixer of FIG. 1.
FIG. 4 shows a bottom view of the food mixer of FIG. 1.

### DETAILED DESCRIPTION OF THE INVENTION

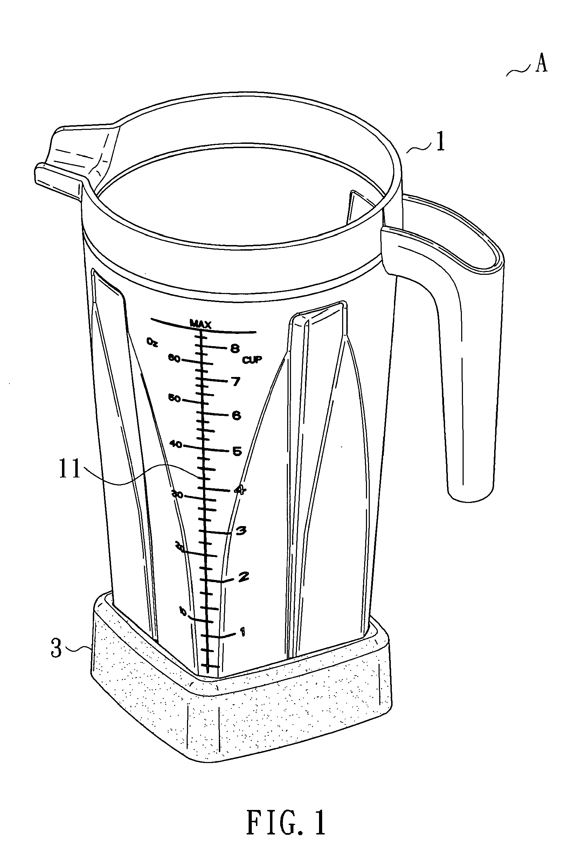

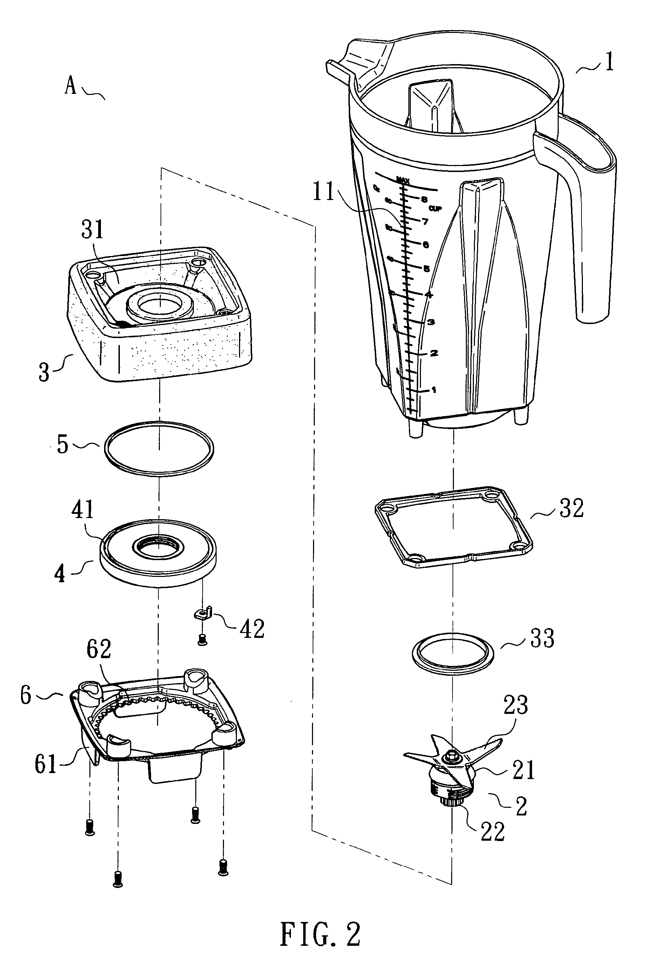

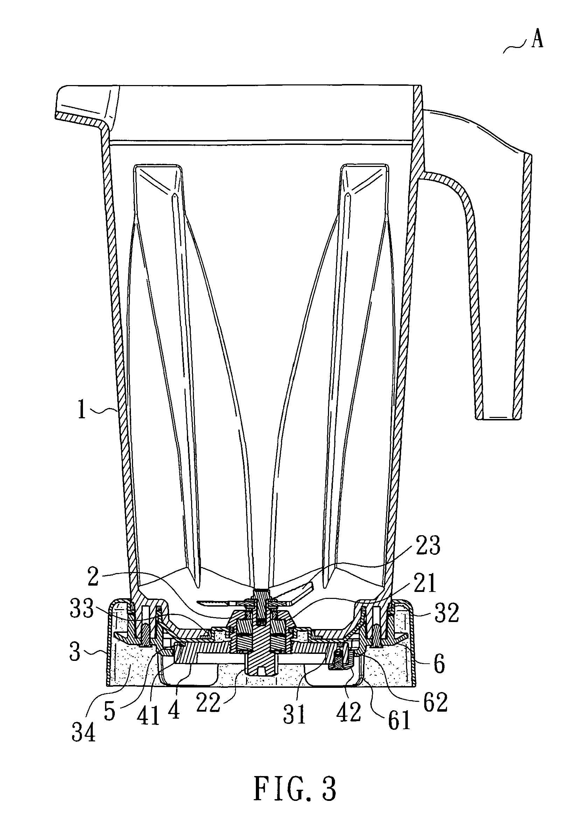

With reference to FIG. 1, a food mixer according to the present invention includes a container A having a container body 1. With reference to FIGS. 2 and 3, the container body 1 is made of a light-transmittable material and includes a scale 11 on an outer periphery thereof, allowing a user to see the level of juice in the container body 1. A blade unit 2 is mounted in the container body 1 and located at an inner side of a bottom wall of the container body 1. The blade unit 2 includes a blade unit body 21 and a coupling member 22 at a bottom of the blade unit body 21. The coupling member 22 is adapted to connect with a shaft of a power unit mounted to a base of the food mixer for driving blades 23 on top of the blade unit 21.

With reference to FIGS. 2 and 3, a seat 3 made of metal is mounted to an outer side of the bottom wall of the container body 1. The seat 3 includes an underside having a first recess 34. A weight 4 is mounted to the underside of the seat 3 to increase an overall weight of the container A. Thus, a user does not have to press the container A downward during use, avoiding the disadvantage of the prior art. A cushioning pad 5 is sandwiched between the weight 4 and the seat 3. The cushioning pad 5 avoids the container A from being damaged by the rotational energy provided by the power unit for driving the blade unit 2. The weight 4 includes a top side having an annular groove 41. The cushioning pad 5 is annular and received in the annular groove 41. Thus, the cushioning pad 5 can be reliably received between the weight 4 and the seat 3.

The seat 3 further includes a top side having a second recess 31. A lower half portion of the container body 1 is partially received in the second recess 31, providing reliable connection. Furthermore, a first waterproof gasket 32 is mounted to an edge of an opening of the second recess 31, avoiding external fluid from flowing into the second recess 31.

The coupling member 22 extends beyond the underside of the seat 3 or an underside of the weight 4. In the form shown, the coupling member 22 extends beyond the underside of the weight 4 and is coupled to the shaft of the power unit for joint rotation purposes. A second waterproof gasket 33 is mounted in an interconnection between the blade unit body 21 and the seat 3, avoiding fluid from flowing into the second recess 31.

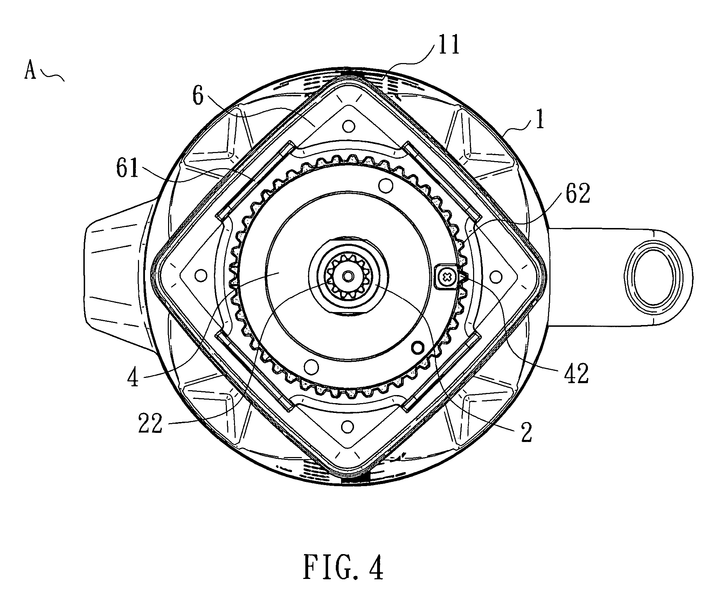

With reference to FIGS. 2 and 4, a connecting frame 6 is mounted to the underside of the seat 3 and received in the first recess 34. The connecting frame 6 includes an underside having a tab 61. When the container A is placed on top of the base of the food mixer, the tab 61 engages with a safety device in the base of the food mixer to allow operation of the base of the food mixer. Furthermore, the connecting frame 6 includes an opening having an inner periphery with a toothed portion 62. The weight 4 faces the opening of the connecting frame 6 and has a tooth 42 on the underside thereof. The tooth 42 is engaged with the toothed portion 62, providing reliable engagement between the seat 3, the weight 4, and the connecting frame 6.

Although specific embodiments have been illustrated and described, numerous modifications and variations are still possible without departing from the scope of the invention. The scope of the invention is limited by the accompanying claims.

## Claims

1. A container for a food mixer comprising:
a container body (1) including a bottom wall, with a blade unit (2) mounted in the container body and including a blade unit body (21) and a coupling member (22); and
a seat (3) made of metal and mounted to an outer side of the bottom wall of the container body, with the seat including an underside having a first recess (34), with a weight (4) mounted to the underside of the seat, with a cushioning pad (5) sandwiched between the weight and the seat, with the coupling member extending beyond the underside of the seat or an underside of the weight, with the coupling member adapted to connect with a shaft of a power unit, **characterized in that**
a connecting frame (6) is mounted to the underside of the seat, with the connecting frame including an underside having a tab (61), wherein the connecting frame further includes an opening having an inner periphery, with the weight facing the opening of the connecting frame, with the inner periphery of the opening of the connecting frame having a toothed portion (62), with the weight having a tooth (42) on the underside thereof, with the tooth (42) engaged with the toothed portion (62).

2. The container for a food mixer as claimed in claim 1, with the seat including a top side having a second recess (31), with a lower half portion of the container body partially received in the second recess, with a first waterproof gasket (32) mounted to an edge of an opening of the second recess.

3. The container for a food mixer as claimed in claim 1, further comprising:
a second waterproof gasket (33) mounted in an interconnection between the blade unit body (21) and the seat (3).

4. The container for a food mixer as claimed in claim 1, with the weight including a top side having an annular groove (41), with the cushioning pad (5) being annular and received in the annular groove.

5. The container for a food mixer as claimed in claim 1, with the container body (1) made of a light-transmittable material, with the container body including a scale (11) on an outer periphery thereof.

## Patentansprüche

1. Behälter für einen Nahrungsmittelmixer umfassend:
einen Behälterkörper (1), der eine Bodenwand aufweist, wobei eine Blatteinheit (2) in dem Behälterkörper montiert ist und einen Blatteinheitskörper (21) und ein Verbindungselement (22) beinhaltet, und
einen Sitz (3), der aus Metall gefertigt ist und an einer Außenseite der Bodenwand des Behälterkörpers montiert ist, wobei der Sitz eine Unterseite beinhaltet, die eine erste Aussparung (34) aufweist, wobei ein Gewicht (4) an der Unterseite des Sitzes montiert ist, wobei ein Dämpfungskissen (5) zwischen dem Gewicht und dem Sitz ausgebildet ist, wobei sich das Verbindungselement über die Unterseite des Sitzes oder eine Unterseite des Gewichts hinaus erstreckt, wobei das Verbindungselement derart ausgebildet ist, mit einer Welle eines Triebwerks verbunden zu werden,
**dadurch gekennzeichnet, dass**
ein Verbindungsrahmen (6) an der Unterseite des Sitzes montiert ist, wobei der Verbindungsrahmen eine Unterseite mit einem Streifen (61) aufweist, wobei der Verbindungsrahmen weiter eine Öffnung beinhaltet, die einen Innenumfang aufweist, wobei das Gewicht der Öffnung des Verbindungsrahmens zugewandt ist, wobei der Innenumfang der Öffnung des Verbindungsrahmens einen gezahnten Bereich (62) aufweist, wobei das Gewicht an seiner Unterseite einen Zahn (42) aufweist, und wobei der Zahn (42) mit dem gezahnten Bereich (62) verzahnt.

2. Behälter für einen Nahrungsmittelmixer nach Anspruch 1, wobei der Sitz eine Oberseite mit einer zweiten Aussparung (31) aufweist, wobei ein unterer Halbbereich des Behälterkörpers teilweise in der zweiten Aussparung aufgenommen ist und wobei eine erste wasserdichte Dichtung (32) an einem Rand einer Öffnung der zweiten Aussparung montiert ist.

3. Behälter für einen Nahrungsmittelmixer nach Anspruch 1, weiter umfassend eine zweite wasserdichte Dichtung (33), die in einer Zwischenverbindung zwischen dem Blatteinheitskörper (21) und dem Sitz (3) ausgebildet ist.

4. Behälter für einen Nahrungsmittelmixer nach Anspruch 1, wobei das Gewicht eine Oberseite mit einer ringförmigen Nut (41) aufweist, und wobei das Dämpfungskissen (5) ringförmig ist und von der ringförmigen Nut ausgenommen wird.

5. Behälter für einen Nahrungsmittelmixer nach Anspruch 1, wobei der Behälterkörper (1) aus einem lichtdurchlässigen Material ausgebildet ist, und wobei der Behälterkörper an seinem äußeren Umfang eine Messskala (11) aufweist.

## Revendications

1. Récipient pour un mélangeur d'aliments, camprenant :
un corps de récipient (1) comprenant une paroi inférieure, avec un bloc de lames (2) monté dans le corps de récipient et comprenant un corps de bloc de lames (21) et un élément de couplage (22) ; et
un siège (3) réalisé en métal et monté sur une face extérieure de la paroi inférieure du corps de récipient, le siège comprenant un dessous présentant un premier évidement (34), un poids (4) étant monté sur le dessous du siège, un coussinet-tampon (5) étant pris en sandwich entre le poids et le siège, l'élément de couplage s'étendant au-delà du dessous du siège ou d'un dessous du poids, l'élément de couplage étant adapté pour la liaison à un arbre d'un bloc d'alimentation,
**caractérisé en ce qu'**un cadre de raccordement (6) est monté sur le dessous du siège, le cadre de raccordement comprenant un dessous présentant une languette (61), dans lequel le cadre de raccordement comprend en outre une ouverture présentant une périphérie intérieure, le poids étant en regard de l'ouverture du cadre de raccordement, la périphérie intérieure de l'ouverture du cadre de raccordement présentant une partie dentée (62), le poids présentant une dent (42) sur son dessous, la dent (42) étant engagée dans la partie dentée (62).

2. Récipient pour un mélangeur d'aliments selon la revendication 1, dans lequel le siège comprend une face supérieure présentant un second évidement (31), une demi partie inférieure du corps de récipient étant reçue partiellement dans le second évidement, un premier joint étanche à l'eau (32) étant monté sur un bord d'une ouverture du second évidement.

3. Récipient pour un mélangeur d'aliments selon la revendication 1, comprenant en outre : un second joint étanche à l'eau (33) monté dans une interconnexion entre le corps de bloc de lames (21) et le siège (3).

4. Récipient pour un mélangeur d'aliments selon la revendication 1, dans lequel le poids comprend une face supérieure présentant une rainure annulaire (41), le coussinet-tampon (5) étant annulaire et reçu dans la rainure annulaire.

5. Récipient pour un mélangeur d'aliments selon la revendication 1, dans lequel le corps de récipient (1) est composé d'un matériau qui laisse passer la lumière, le corps de récipient comprenant une échelle graduée (11) sur sa périphérie extérieure.
